Europäisches Patentamt

European Patent Office

Office européen des brevets

(11) Publication number: **0 430 894 A1**

## EUROPEAN PATENT APPLICATION

(21) Application number: 90830481.9

(22) Date of filing: 26.10.90

(51) Int. Cl.⁵: **B60K 6/04**

(30) Priority: 30.10.89 IT 4850289

(43) Date of publication of application:
05.06.91 Bulletin 91/23

(84) Designated Contracting States:
**AT BE CH DE ES FR GB GR LI LU NL SE
Bulletin**

(71) Applicant: **Prato, Alessandro Pini, Prof.
Via G. Marconi 4
I-16031 (Bogliasco) Genova(IT)**

(72) Inventor: **Prato, Alessandro Pini, Prof.
Via G. Marconi 4
I-16031 (Bogliasco) Genova(IT)**

(74) Representative: **Mariani, Giulio
c/o Centro Sviluppo Materiali SpA P.O. BOX
10747
I-00100 Roma Eur(IT)**

(54) Hybrid road vehicle.

(57) In order to make rational use of energy during the phases of its conversion and to reduce environmental impact, a light vehicle is proposed for the urban transport of persons and/or things, namely a hybrid motor vehicle, wherein a current generator operating at a speed (rpm) around the value which corresponds to optimal efficiency, during the whole period of operation of the vehicle itself, charges floating batteries of accumulator which, in turn supply an electric-traction motor.

EP 0 430 894 A1

## HYBRID ROAD VEHICLE

In transport the power-generation function, which is optimal at a constant speed (rpm), is in contrast with the traction function which is typically duscontinuous. Autonomy and performance, which have so far almost completely excluded the use of electric traction vehicles, have necessitated the employment of internal combustion engines which, though providing the answer to the need for rapid power, have very low energy efficiency.

The evermore widespread use of vehicles powered by internal combustion engines thus results in heavy consumption of nonrenewable energy converted inefficiently and in a big increase in polluting solid and gaseous emissions resulting from combustion.

The first attempt to resolve this problem involved the use of all-electric-traction vehicles. This class of vehicles can be broken down into:
- vehicles which rely on an external electric supply line;
- vehicles fitted with batteries of accumulators;
- vehicles with internal current generation (Solar cells, fuel cells, etc.).

Vehicles of the first type suffer from the enormous limitation of requiring a supply line, hence their motility is limited, and they are suitable essentially for urban public trasport. Then too, the cost of the necessary infrastructure and the maintenance thereof further limits the desirability of this kind of vehicle.

The autonomy and speed of vehicles of the second type are limited by the weight and size of the energy storage system. Those of the third type are greatly limited by the lower conversion efficiency of solar cells, while fuel cells are not as yet sufficiently well developed.

Hybrid vehicles have thus been proposed. These have an electric motor and an internal combustion engine, which are used both together or alternatively for traction.

A drawback with the solutions proposed so far is that a motor and an engine, both of considerable power, have been coupled together and batteries of accumulators have been inserted for running the electric motor. All this leads to a big increase in weight and even less rational utilization of the installed power. Furthermore, the discontinuous use of high-powered internal combustion engines does not significantly improve the environmental pollution situation.

During studies on these matters, attention has been focused specifically on the diverse needs of power generation and its use for traction. It as also been ascertained that the average power employed for traction considerably less than the installed power.

Consideration has thus been given to the idea of a hybrid model using a suitably fed current generator which could supply a floating electric-energy storage/source system connected in turn to an electric motor of the necessary power.

According to the present invention, this satisfactorily resolves the problem of optimizing current generation, use of the generated power, reduction in environmental pollution and practicalness and autonomy in vehicle usage. The ligh hybrid vehicle or motor-vehicle for urban transport of persons and/or things, according to the present invention is thus equipped with an electric traction system rated at power P in keeping with the vehicle size and performance, batteries of accumulators for supplying the traction system and a current generating system of power P1 generally between 10 and 30% of P which feeds the floating batteries of accumulators.

Power P1 is selected as a function of the average power PM required for traction and is preferably between PM + 10%PM and PM + 20%PM. Other ranges can be selected to suit particular contingent needs.

The current-generation system is mechanically independent of the traction system and during the whole period the vehicle is utilized it is made to operate at virtually constant speed, namely at a number of rpm (revolution per minute) that ensures optimal efficiency. If heat engines are used, this speed is established at around the number of rpm that guarantee minimum specific consumption, with a tolerance of 15% on the optimum number of rpm.

In operation the current generator is started and brought up to constant speed within the desired delivered power range. When the vehicle is accelerated, the electric traction system will absorb the necessary power from the batteries; this will be greater than that delivered by the generator. This excess power usage is at least partially made good by the generator when the vehicle slows down or halts.

Energy recovery system are, of course, used during braking; one example is use of the traction motor as generator during this operation. When the vehicle is operating at steady speed, the generator compensates partly or entirely for the battery discharge due to absorption by the motor, and can even provide a charge for the accumulators.

Generator power, electric-motor power and the capacity of the batteries of accumulators are balanced to ensure that after a given period of use (e.g. daily) the batteries still have sufficient charge to guarantee the life determined by the technical and economic evaluations. This results in optimization of the weight and autonomy of the vehicle on the one hand and the useful life of the batteries on the other (under normal use conditions, this depends on the extent to which they are allowed to run down).

In practice, for a light vehicle used for the urban transport of persons and/or things, or for a motor-vehicle weighing less than two tonnes, the choice is for a heat engine connected to a current generator for feeding betteries of accumulators, and one or more electric motors for traction; the ratio of the power of he heat engine to the total power of the electric motor(s) is between 10 and 30%, preferably being between and 25%.

The batteries of accumulators must be able to deliver high peak currents, typically above 100 A and up to 300 A; by using a battery pack with a 100 Ah rating, instance, the peak current must be between 150 and 250 A, to optimize vehicle autonomy and to safeguard the life of the batteries with 5-hour ratings between 60 and 100 Ah.

On this basis, it has been possible to run a car in town with a range in excess of 256 km, at an average speed of 27 km/h. On completion of this trial the batteries showed no appreciable signs of deterioration.

This particular type of power supply for the test vehicle ensures big benefits especially as regards reduction in noise and atmospheric pollution; in fact, the heat motor is small, so noise insulation is easy, and it is run at virtually constant speed, so not only can it be tuned to emit the smallest quantity of pollutants, its emissions can readily be subjected to further cleaning. Finally fuel consumption is between 20 and 30% lower than that of a similar conventional vehicle.

## Claims

1. Light hybrid vehicle for urban transport of persons and/or things, having a weight of less than 2 tonnes, or a motor-vehicle equipped with a heat engine coupled to a generator for current generation, batteries of accumulators fed by said generator and at least one electric motor fed by said batteries, characterized by the fact that said batteries of accumulators are floating with the electric motor, deliver a peak current in excess of 150 A, and the ratio of the power of the heat engine to the electric traction motor or motors is between 10 and 30%.

2. Hybrid vehicle for the urban transport of persons and/or things, as per Claim 1, characterized by the fact that each of said batteries is rated at between 90 and 120 Ah, while the peak current delivered is between 150 and 300 A, and the ratio of the power of the heat engine to that of the electric traction motor or motors is between 15 and 25%.

3. Hybrid vehicle as per Claim 2, characterized by the fact that the peak current that can be delivered by said batteries is between 200 and 250 A.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 301 230   (AMLION PROPULSION, INC.) <br> * abstract * * page 11, line 7 - page 12 * <br> – – – | 1-3 | B 60 K <br> 6/04 |
| A | GB-A-1 590 375   (CHLORIDE_GROUP LTD.) <br> * the whole document * <br> – – – – – | 1-3 | |

TECHNICAL FIELDS
SEARCHED (Int. Cl.5)

B 60 K
B 60 L

The present search report has been drawn up for all claims

| Place of search | Date of completion of search | Examiner |
|---|---|---|
| The Hague | 12 February 91 | TOPP-BORN S. |